# EUROPEAN PATENT SPECIFICATION

(11) **EP 1 703 060 B1**
(45) Date of publication and mention of the grant of the patent: **30.01.2008**
(21) Application number: 06004928.5
(22) Date of filing: 10.03.2006
(51) Int. Cl.: E05F 5/02, F16F 9/36

(54) **Damping device for pieces of furniture with compensation system for volume variations**
Dämpfer für Möbel mit Ausgleichssystem für Volumenänderungen
Amortisseur pour meubles avec système de compensation pour des changements de volume

(30) Priority: 15.03.2005 IT MI20050419
(43) Date of publication of application: 20.09.2006
(73) Proprietor: Agostino Ferrari S.p.A., 24122 Bergamo (IT)
(72) Inventor: Migli, Carlo, 23900 Lecco (IT)
(74) Representative: Bottero, Claudio

(56) References cited:
- EP-A- 1 378 680
- DE-A1- 2 540 720
- DE-C- 908 102
- US-A1- 2002 010 977
- US-B1- 6 315 093

## Description

The present invention refers to a damping device, in particular to a damping device for damping impacts of mobile parts in pieces of furniture.

The invention also refers to a piece of furniture comprising such a damping device.

In the field of pieces of furniture of various types and for different uses comprising mobile parts, such as, for example, sliding doors or drawers, it is known to use damping devices to dampen impacts of such mobile parts when they come into abutment with the fixed structure of the respective piece of furniture. The occurrence of impacts, as well as being unpleasant for users, can indeed in the long term compromise the functionality of the pieces of furniture.

A type of damping device commonly used for the aforementioned purposes is represented by linear hydraulic dampers, essentially consisting of a piston slidably mounted inside a casing defining an inner chamber containing a viscous fluid, responsible for the damping effect. The piston defines two regions with variable volume in the inner chamber: when the force of an impact discharges on a stem associated with the piston, the viscous fluid is forced to pass from a first region where the pressure increases to a second low-pressure region where the fluid is collected. When the thrust exerted on the stem ceases, a spring resets the piston and the stem and the fluid is taken back into the first region, so that the damper is ready for another working cycle.

Although damping devices of this type are known also in other technical fields, the versions used in the furniture industry must satisfy specific operating requirements, as well as strict demands of cost-effectiveness and compactness that are essential in this field, determining the special structural and functional characteristics thereof.

In particular, in damping devices for pieces of furniture of the type described above there is the requirement that the volume of the inner chamber be completely filled by the viscous fluid to avoid noises during operation and to optimise the damping action. While satisfying this requirement it shall be considered that, when the stem is inserted into the inner chamber due to an impact, the volume available to the viscous fluid in the inner chamber decreases due to the bulk of the stem itself, and then increase again when the stem comes out during the reset stroke. Therefore, damping devices have been developed which are equipped with a system for compensating the volume of the viscous fluid displaced by the stem during the movements of the piston. Generally, such damping devices comprise a suitable cavity of variable volume in fluid communication with the inner chamber, which substantially acts as a lung for the volume variation occurring within the inner chamber when the stem is inserted/withdrawn.

In known damping devices, the volume variation within the cavity of the volume compensation system is usually achieved by placing inside the cavity a spongy body with closed alveoli containing a compressible fluid, typically air, which can be squeezed, increasing the volume of the cavity, under the thrusting effect of the viscous fluid.

Damping devices for pieces of furniture equipped with a volume compensation system of the type described above are for example disclosed in documents US 2003/0075845 A1 and US 2002/0010977 A1.

Such damping devices, although substantially suitable for satisfying the above-mentioned requirement, do have some drawbacks.

A first drawback is connected to the overpressure (compared to atmospheric pressure) arising in the inner chamber upon compression of the spongy body for compensating the volume of viscous fluid displaced by the insertion of the stem in the inner chamber. Such an overpressure determines an undesired additional thrust on the stem and on the piston, which tends to push the stem out from the inner chamber and could therefore prevent a mobile part from correctly closing in abutment against the damping device.

A second drawback is connected to the presence of a compressible fluid, such as air, inside the alveoli of the spongy body. The breaking of one or more alveoli, e. g. by wear, can compromise the correct operation of the damping device due to the formation of dispersions of compressible fluid in the viscous fluid.

The purpose of the present invention is to provide a damping device that is able to overcome the drawbacks of the prior art and that is also constructively simpler and more compact.

According to a first aspect thereof, the present invention therefore concerns a damping device, in particular for damping impacts of mobile parts in pieces of furniture, comprising:
- a casing wherein an inner chamber is defined containing a viscous fluid and substantially closed at its open end by a cap;
- a piston slidably mounted in the inner chamber;
- a stem having a first end associated with the piston and a second end projecting from the inner chamber through said cap,
characterised in that said cap comprises at least one floating gasket slidably mounted in a cavity defined in the cap, said floating gasket defining in said cavity a region with variable volume suitable for receiving the viscous fluid displaced in said inner chamber from said stem during the movements of said piston.

The cavity defined in the cap and the floating gasket slidably mounted therein define a system for compensating the variation of the volume available in the inner chamber for receiving the viscous fluid, hereafter defined as "useful volume", said variation being due to the insertion/removal of the stem. The compensation takes place effectively thanks to the sliding capability of the floating gasket inside the cavity defined in the cap, said sliding being controlled by the viscous fluid that flows from the inner chamber of the damping device into such a cavity and vice-versa.

During the working stroke of the piston, i.e. the stroke in which the damping of the impact takes place, the useful volume of the inner chamber of the damping device decreases due to the insertion of the stem and the viscous fluid consequently displaced flows into the cavity defined in the cap. This makes the floating gasket slide so as to increase the volume of the region with variable volume defined by the floating gasket in the aforementioned cavity. During the subsequent reset stroke of the piston, i.e. the stroke in which the piston and the stem are taken back into their initial position to carry out another working cycle, the stem comes out from the inner chamber of the damping device with an increase in the useful volume, that can once again be filled by the viscous fluid previously temporarily accumulated in the region with variable volume, defined by the floating gasket. During the flowing of the viscous fluid from the cavity defined in the cap towards the inner chamber of the damping device a sliding of the floating gasket is also caused in the opposite direction to the previous one and such as to decrease the volume of the region with variable volume.

Advantageously, the volume compensation system described above avoids the use of compressible bodies, such as spongy bodies incorporating air, to carry out the volume compensation. The damping device of the invention thus allows the drawbacks described above with reference to the damping devices of the prior art to be substantially eliminated and has, compared to them, a simpler overall structure, with consequent lower manufacturing costs.

A further structural simplification of the damping device of the invention is due to the advantageous possibility of using the floating gasket both for volume compensation and as a sealing element, for which reason it is not necessary to provide further gaskets at the cap to ensure the seal of the inner chamber.

Moreover, the volume compensation system is advantageously defined inside the cap, so as to substantially limit the overall dimensions of the damping device of the invention.

Preferred characteristics of the damping device according to the invention are defined in the attached claims 2-9, the content of which is here fully incorporated as a reference.

According to a second aspect thereof, the present invention refers to a piece of furniture comprising a damping device of the aforementioned type.

Of course, the advantageous characteristics outlined above with reference to the damping device of the present invention define as many advantageous characteristics of the piece of furniture in which the damping device can be mounted, said piece of furniture therefore being structurally and functionally simpler and less expensive.

Further characteristics and advantages of the invention shall become clearer from the following description of some preferred embodiments thereof, made hereafter, for indicating and not limiting purposes, with reference to the attached drawings. In such drawings:
- figure 1 is an exploded perspective view of a damping device according to the invention;
- figure 2 is a side view of a casing of the damping device of figure 1;
- figure 3 is a longitudinal section view taken along the line A-A of the casing of figure 2;
- figure 4 is a side view of a cap of the damping device of figure 1;
- figures 4a, 4b are respectively a front and a rear view of the cap of figure 4;
- figure 5 is a longitudinal section view taken along the line B-B of the cap of figure 4;
- figure 6 is a side view of a piston of the damping device of figure 1;
- figures 6a, 6b are respectively a front and a rear view of the piston of figure 6;
- figure 7 is a longitudinal section view taken along the line C-C of the piston of figure 6;
- figure 8 is a side view of the piston of figure 6 operatively associated with a floating shutter in a first operating position;
- figure 8a is a longitudinal section view taken along the line D-D of the piston of figure 8;
- figure 9 is a side view of the piston of figure 6 operatively associated with a floating shutter in a second operating position;
- figure 9a is a longitudinal section view taken along the line E-E of the piston of figure 9;
- figure 10 is a side view of the damping device of figure 1 in a first operating configuration;
- figure 10a is a longitudinal section view taken along the line F-F of the damping device of figure 10;
- figure 11 is a side view of the damping device of figure 1 in a second operating configuration;
- figure 11a is a longitudinal section view taken along the line G-G of the damping device of figure 11.

In such figures, a damping device according to the invention is wholly indicated with reference numeral 100.

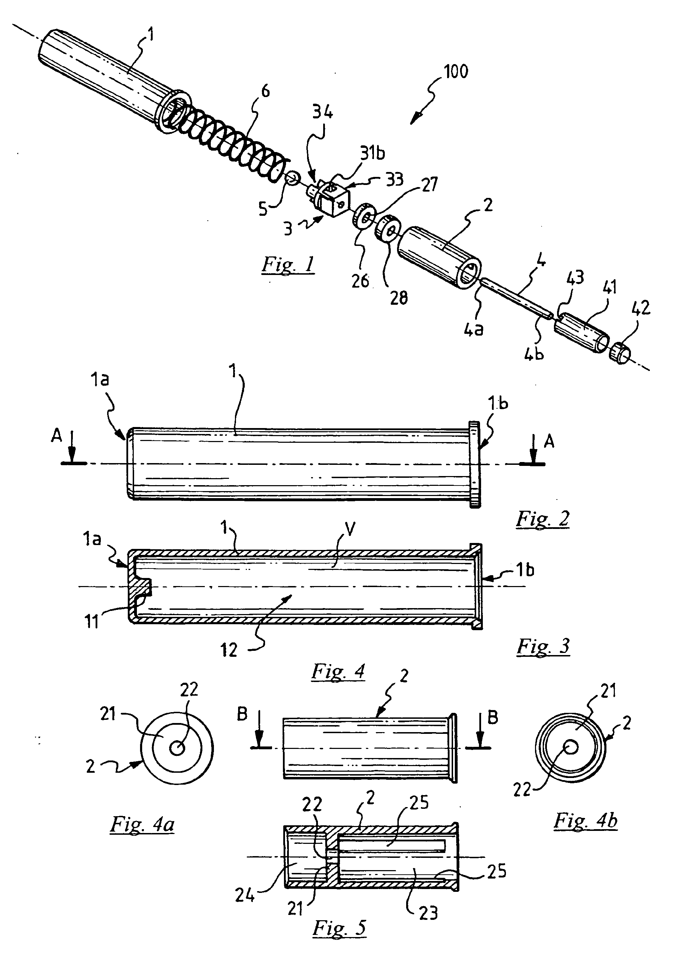

The damping device 100 (fig. 1) essentially comprises a casing 1 in which an inner chamber 12 is defined, a cap 2 that substantially closes the inner chamber 12 making a seal with the inner surface of the casing 1, a piston 3 slidably mounted inside the inner chamber 12, a stem 4 associated with the piston 3 and a resetting element 6.

The casing 1 (figs. 2 and 3) is preferably cylindrical and has a first longitudinal end 1a closed and a second longitudinal end 1b open to allow the insertion of the piston 3 and of other components inside the casing 1 itself. After the assembly of such components, the cap 2 is applied at the longitudinal end 1b. Inside the casing 1 at the longitudinal end 1a a boss 11 is formed defining an abutment for the piston 3.

The inner chamber 12 defined by the casing 1 has a volume V suitable for receiving the aforementioned components and containing a viscous fluid responsible for the damping action. Such a viscous fluid is preferably a silicon-based fluid, of the type commonly known to those skilled in the art and available on the market.

The piston 3 is slidably mounted in the inner chamber 12 and defines inside it two regions Z₁, Z₂ with variable volume in fluid communication with each other at at least one duct 31 defined in the piston 3 and at an hollow space 32 defined between the outer surface of the piston 3 and the inner surface of the casing 1.

A floating shutter 5, preferably spherical in shape, is operatively associated with the piston 3 to close the duct 31 during the working stroke of the piston 3 and to open the duct 31 during the reset stroke of the piston 3.

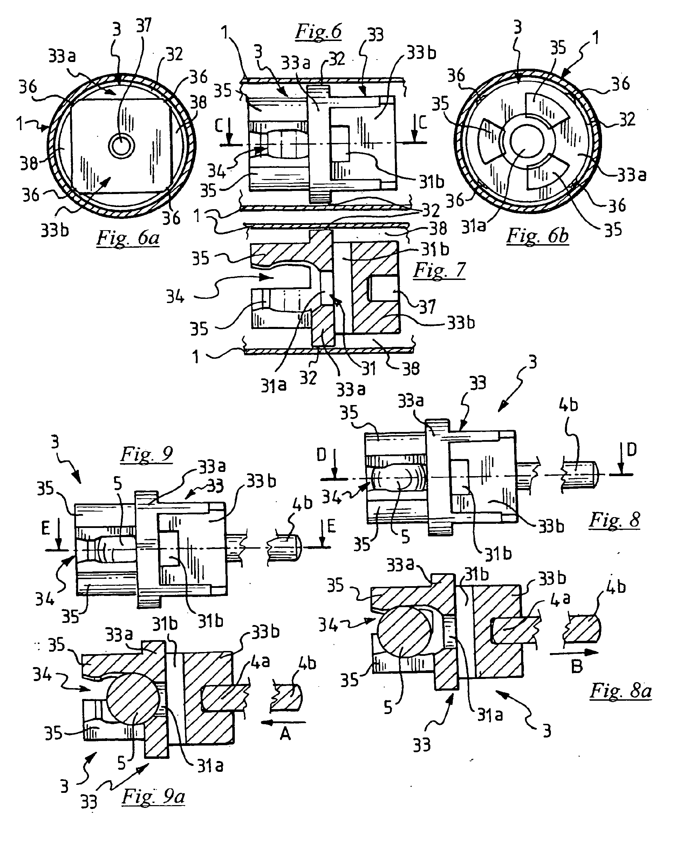

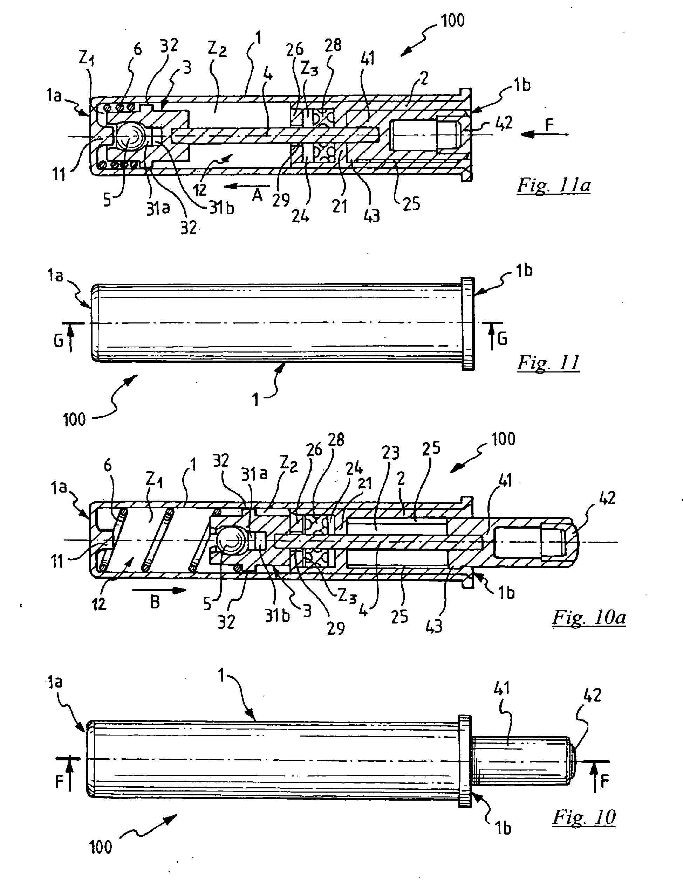

The piston 3 (figs. 6, 6a, 6b, 7) essentially comprises a central body 33 and a seat 34 for the floating shutter 5, preferably at least partially defined by projections 35 projecting axially from the central body 33. In the seat 34 the floating shutter 5 is free to move between a first operating position in which it opens the duct 31 (figs. 8, 8a and 10a) and a second operating position in which it closes the duct 31 (figs. 9, 9a and 11a), according to the motion of the piston 3 in the inner chamber 12.

Preferably, the central body 33 comprises a first portion 33a having a large cross section and a second portion 33b, extending axially from the first portion 33a on the opposite side to the seat 34. The second portion 33b defines with the inner surface of the casing 1 at least one receiving region 38 of the viscous fluid in fluid communication with the duct 31. The first portion 33a is preferably substantially cylindrical and the second portion 33b is preferably substantially prismatic, even more preferably parallelepiped or cubic. The second portion 33b preferably comprises at least two diametrically opposite edges 36 extending radially beyond the first portion 33a. The corners 36, preferably chamfered, are suitable for cooperating with the inner wall of the casing 1 to guide the stroke of the piston 3.

At the second portion 33b a dead hole is also defined in an axial position for receiving the first end 4a of the stem 4, for example through force fitting. A second end 4b of the stem axially projects from the inner chamber 12 at the cap 2 in the rest configuration of the damping device 100 (figs. 10, 10a). Preferably, the second end 4b of the stem 4 is associated with a push rod 41, which is preferably equipped with an abutment element 42 made from rubber to muffle the noise of the impacts.

Preferably, the duct 31 defined in the piston 3 comprises at least one substantially axial portion 31a at the first portion 33a of the central body 33 and at least one substantially radial portion 31b at the second portion 33b of the central body 33. In the case where the second portion 33b is prismatic, the at least one substantially radial portion 31b of the duct 31 extends substantially perpendicular to a side face of the second portion 33b of the central body 33.

In the preferred embodiment illustrated here (see in particular figs. 7, 8a, 9a), the substantially radial portion 31b of the duct 31 extends between two diametrically opposite side faces of the portion 33b of the central body 33 and is in fluid communication with two receiving regions 38 of the viscous fluid, which are defined at opposite sides of the portion 33b between the aforementioned side faces and the inner surface of the casing 1. The duct 31 therefore defines through the piston 3 a substantially T-shaped path for the viscous fluid.

The cap 2 (figs. 4, 4a, 4b and 5) preferably consists of a hollow body that is substantially cylindrical, or in any case has cross section and external dimensions such as to allow it to be mounted coaxially inside the casing 1 at the end 1b for at least a portion of the cap 2 and, preferably, for the entire longitudinal extension thereof, as illustrated in figures 10a and 11a.

According to the invention, the cap 2 comprises at least one floating gasket 28 slidably mounted in a cavity 24 defined in the cap 2. The floating gasket 28 defines a region with variable volume Z₃ in the cavity 24 suitable for reversibly receiving the viscous fluid displaced in the inner chamber 12 by the stem 4 during movements of the piston 3.

Preferably, the cap 2 also comprises an annular partition 26 (visible in figs. 1, 10a and 11a) suitable for axially dividing the cavity 24 from the inner chamber 12. The presence of the annular partition 26 is advantageous to define an abutment for the floating gasket 28.

Preferably, the cavity 24 is in fluid communication with the inner chamber 12 at a hole 27 defined in the annular partition 26 and provided for allowing the slidable coupling with the stem 4 with a predetermined radial clearance 29. Advantageously, such a radial clearance 29 allows the inner chamber 12 to be placed in fluid communication with the cavity 24 in a simple and compact way.

Preferably, the annular partition 26 is removably associated with the cap 2, so as to allow the floating gasket 28 to be easily assembled in the cavity 24.

On the opposite side to the annular partition 26 the cavity 24 is axially defined by a transverse wall 21 defined inside the cap 2 and having a hole 22, substantially coaxial with hole 27, for the passage of the stem 4, in this case with a minimal radial clearance due to just the dimensional tolerances.

The cavity 24 and the floating gasket 28 advantageously define a system for compensating the variation of the useful volume occurring in the inner chamber 12 due to the insertion/removal of the stem 4, as better illustrated hereafter with reference to the operation of the damping device 100.

In the preferred embodiment of the invention illustrated here, the floating gasket 28 is a double-seal gasket, also known to those skilled in the art with the term X-shaped gasket or sleeve gasket, arranged to provide a seal on the side walls of the cavity 24 and on the stem 4. The possibility of making a seal also on the stem 4 through the floating gasket 28, and therefore of substantially sealably insulating the inner chamber 12 and the cavity 24 towards the outside, advantageously allows the structure of the damping device 100 to be simplified, since the use of a further gasket arranged specifically for this purpose can be avoided.

The damping device 100 is dimensioned so that the ratio of the cross section of the cavity 24 to the cross section of the stem 4 is preferably between about 5 and about 30, more preferably between about 10 and about 20. This allows the volume compensation to be achieved with minimal axial sliding of the floating gasket 28 in the cavity 24, and therefore allows the axial extension of the cavity 24 and the overall dimensions of the damping device 100 to be advantageously limited.

As illustrated in figure 5, the cap 2 also preferably comprises a seat 23 adapted to receive the push rod 41 of the stem 4 substantially completely in the operative configuration in which the piston 3 is at the end of its working stroke (figs. 11, 11a). In order to avoid the accidental detachment of the push rod 41 from the stem 4, at least one longitudinal groove 25 having an axially outer end positioned a predetermined distance from the outer edge of the cavity 23 is preferably defined on the inner surface of the cavity 23, said groove being adapted to slidably receive at least one projection 43 extending laterally from the push rod 41.

The damping device 100 further comprises a conventional resetting element 6, for example a coil spring, suitable for providing the force required to reset the piston 3 and the stem 4. In the preferred embodiment illustrated here, the resetting element 6 is housed inside the casing 1 and is operatively arranged between the longitudinal end 1a of the casing 1 and the piston 3.

Referring in particular to figures 10a and 11a the operation of the damping device 100 shall now be described. Figure 10a shows the damping device 100 in a first operating configuration at rest, when external forces do not act upon the device. In this operating configuration, the resetting element 6 keeps the piston 3 pressed against the annular partition 26 of the cap 2 and the push rod 41 associated with the stem 4 projects from the casing 1 in a state of maximum extension from the respective seat 23 defined in the cap 2.

Under an external force F, due for example to an impact against the push rod 41 following the closing of a mobile part of a piece of furniture, the piston 3 moves in the direction of the arrow A, carrying out the working stroke. The displacement of the piston 3 determines in the inner chamber 12 a volume reduction of the region Z₁ and a volume increase of the region Z₂. The motion of the piston 3 combined with the pressure increase in the region Z₁ takes and keeps the shutter 5 in its second operative position, in which it closes the portion 31a of the duct 31, preventing the passage of the viscous fluid. In this condition, the only passageway available to the viscous fluid towards the region Z₂ consists of the hollow space 32, for which reason the resistance against the motion of the piston 3 and the damping effect are at their maximum.

During the working stroke of the piston 3, the useful volume available to the viscous fluid in the inner chamber 12 decreases due to the progressive insertion of the stem 4. Such a volume decrease is compensated by the volume increase of the region Z₃ in the cavity 24 of the cap 2, made possible by the sliding of the floating gasket 28 inside the cavity 24 caused by the push of the viscous fluid itself. The viscous fluid displaced by the stem 4 can flow from the inner chamber 12 into the cavity 24 thanks to the radial clearance 29 between the hole 27 of the annular partition 26 and the stem 4 slidably mounted through it.

The working stroke of the piston 3 ends when the floating shutter 5 comes into abutment against the boss 11 of the casing 1 and the push rod 42 is received substantially completely in the seat 23 of the cap 2. The damping device 100 is thus in a second operating configuration, represented in figure 11a, and remains in such a configuration until the external force F is applied, for example all the time the mobile part of a piece of furniture remains closed.

When the external force F is removed, the resetting element 6, compressed during the working stroke, determines the reset stroke in which the piston 3 moves in the direction of the arrow B. The displacement of the piston 3 determines in the inner chamber 12 a volume reduction of the region Z₂ and a volume increase of the region Z₁. The motion of the piston 3 combined with the pressure increase in the region Z₂ causes the shutter 5 to move away from the piston 3, and takes the shutter 5 into its first operating position, in which it opens the duct 31 in the piston 3. In this condition the viscous fluid can flow from the region Z₂ to the region Z₁ both through the hollow space 32 and through the duct 31. The resistance against the motion of the piston 3 and the required resetting force are thus substantially low.

During the reset stroke of the piston 3, the useful volume available to the viscous fluid in the inner chamber 12 once again increases thanks to the progressive removal of the stem 4 and the viscous fluid previously temporarily received in the cavity 24 of the cap 2 can again flow into the inner chamber 12. This flow also makes the floating gasket 28 slide towards the annular partition 26 with a consequent volume decrease of the region Z₃.

The reset stroke ends when the piston 3 comes into abutment against the annular partition 26 of the cap 2 and the damping device 100 is again in the first operating configuration.

The damping device 100 has a preferred although not exclusive use in pieces of furniture to dampen impacts of mobile parts coming into abutment with a fixed structure of the respective piece of furniture. Thus, the damping device 100 can be installed inside a piece of furniture (not illustrated in the figures), comprising a fixed structure, to which the casing 1 of the damping device 100 is fixed, and a mobile part, for example a door or a sliding drawer, which during closing comes into abutment with the damping device 100.

## Claims

1. Damping device (100), in particular for damping impacts of mobile parts in pieces of furniture, comprising:
- a casing (1) wherein an inner chamber (12) is defined containing a viscous fluid and substantially closed at its open end by a cap (2);
- a piston (3) slidably mounted in said inner chamber (12);
- a stem (4) having a first end (4a) associated with said piston (3) and a second end (4b) projecting from said inner chamber (12) through said cap,
**characterised in that** said cap (2) comprises at least one floating gasket (28) slidably mounted in a cavity (24) defined in said cap (2), said floating gasket (28) defining in said cavity (24) a region (Z₃) with variable volume suitable for receiving the viscous fluid displaced into said inner chamber (12) by said stem (4) during the movements of said piston (3).

2. Damping device (100) according to claim 1, wherein said cap (2) comprises an annular partition (26) suitable for axially dividing said cavity (24) from said inner chamber (12).

3. Damping device (100) according to claim 2, wherein said cavity (24) is in fluid communication with said inner chamber (12) at a hole (27) defined in said annular partition (26) and provided for receiving said stem (4) with a predetermined radial clearance.

4. Damping device (100) according to claim 2, wherein said annular partition (26) is removably associated with said cap (2).

5. Damping device (100) according to any one of the previous claims, wherein said floating gasket (28) is a double-seal gasket arranged to provide a seal on said stem (4) and on the side walls of said cavity (24).

6. Damping device (100) according to any one of the previous claims, wherein the ratio of the cross section of said cavity (24) to the cross section of said stem (4) is between about 5 and about 30.

7. Damping device (100) according to claim 6, wherein the ratio of the cross section of said cavity (24) to the cross section of said stem (4) is between about 10 and about 20.

8. Damping device (100) according to any one of the previous claims, wherein said cap (2) comprises a seat (23) adapted to receive substantially completely a push rod (41) associated with said second end (4b) of the stem (4).

9. Damping device (100) according to claim 8, wherein said seat (23) comprises at least one longitudinal groove (25) adapted to slidably receive at least one projection (43) laterally extending from said push rod (41).

10. Damping device (100) according to any one of the previous claims comprising a resetting element (6) suitable for providing a resetting force for said piston (3), said resetting element (6) being housed inside said inner chamber (12).

11. Piece of furniture comprising a damping device (100) according to any one of the previous claims.

## Patentansprüche

1. Dämpfungsvorrichtung (100) insbesondere zum Dämpfen von Schlägen von beweglichen Bauteilen in Möbelstücken, umfassend:
- ein Gehäuse (1), in dem eine Innenkammer (12) definiert ist, in der ein viskoses Fluid enthalten ist und durch einen Deckel (2) an deren offenen Ende im wesentlichen geschlossen ist;
- einen Kolben (3), der gleitbar in der Innenkammer (12) angeordnet ist;
- einen Schaft (4) mit einem ersten Ende (4a), der dem Kolben (3) zugeordnet ist, und einem zweiten Ende (4b), das von der Innenkammer (12) durch die Kappe hindurch vorsteht,
**dadurch gekennzeichnet, daß** die Kappe wenigstens eine schwimmende Dichtung (28) umfaßt, die in einem Hohlraum (24) gleitbar angeordnet ist, der in dem Deckel (2) definiert ist, wobei die schwimmende Dichtung (28) in dem Hohlraum (24) einen Bereich (Z₃) mit einem variablen Volumen definiert, um das viskose Fluid aufnehmen zu können, das in die Innenkammer (12) durch den Schaft (4) während der Bewegung des Kolbens (3) gebracht ist.

2. Dämpfungsvorrichtung (100) nach Anspruch 1, bei der der Deckel (2) ein ringförmiges Abteil (26) umfaßt, das zum axialen Teilen des Hohlraums (24) von der Innenkammer (12) geeignet ist.

3. Dämpfungsvorrichtung (100) nach Anspruch 2, bei der der Hohlraum (24) mit der Innenkammer (12) über ein Loch (27) fluidal verbunden ist, das in dem ringförmigen Abteil (26) definiert und zum Aufnehmen des Schaftes (4) mit einem vorbestimmten radialen Spiel vorgesehen ist.

4. Dämpfungsvorrichtung (100) nach Anspruch 2, bei der das ringförmige Abteil (26) entfernbar mit dem Deckel (2) verbunden ist.

5. Dämpfungsvorrichtung (100) nach einem der vorstehenden Ansprüche, bei der die schwimmende Dichtung (28) eine doppelt dichtende Dichtung ist, die angeordnet ist, um an dem Schaft (4) und an den Seitenwänden des Hohlraums (24) zu dichten.

6. Dämpfungsvorrichtung (100) nach einem der vorstehenden Ansprüche, bei dem das Verhältnis des Querschnitts des Hohlraums (24) zum Querschnitt des Schafts (4) zwischen etwa 5 und etwa 30 liegt.

7. Dämpfungsvorrichtung (100) nach Anspruch 6, bei der das Verhältnis des Querschnitts des Hohlraums (24) zum Querschnitt des Schafts (4) zwischen etwas 10 und etwa 20 liegt.

8. Dämpfungsvorrichtung (100) nach einem der vorstehenden Ansprüche, bei der die Kappe (2) einen Sitz (23) umfaßt, um eine Druckstange (41) im wesentlichen vollständig aufzunehmen, die mit dem zweiten Ende (4b) des Schafts (4) verbunden ist.

9. Dämpfungsvorrichtung (100) nach Anspruch 8, bei der der Sitz (23) wenigstens eine Längsnut (25) umfaßt, um wenigstens einen Vorsprung (43) gleitbar aufzunehmen, der sich von der Druckstange (41) lateral erstreckt.

10. Dämpfungsvorrichtung (100) nach einem der vorstehenden Ansprüche mit einem Rückstellbauteil (6), das zum Bereitstellen einer Rückstellkraft für den Kolben (3) geeignet ist, wobei das Rückstellbauteil (6) innerhalb der Innenkammer (12) untergebracht ist.

11. Möbelstück mit einer nach einem der vorstehenden Ansprüche ausgebildeten Einrichtung.

## Revendications

1. Amortisseur (100), en particulier pour amortir des chocs sur des parties mobiles de meubles comprenant :
- une douille (1) définissant une chambre interne contenant un fluide visqueux et sensiblement fermé à une extrémité par un bouchon (2) ;
- un piston (3) monté coulissant dans ladite chambre interne (12) ;
- une tige (4) ayant une première extrémité (4a) associée audit piston (3) et une seconde extrémité (4b) se prolongeant depuis l'intérieur de la chambre (12) au travers dudit bouchon,
**caractérisé en ce que** ledit bouchon (2) comprend au moins un joint flottant (28) monté coulissant dans une cavité (24) définie dans ledit bouchon (2), ledit joint flottant (28) définissant dans ladite cavité (24) une zone (Z3) avec un volume variable adapté pour recevoir le fluide visqueux déplacé dans ladite chambre interne (12) par ladite tige (4) durant le mouvement dudit piston (3).

2. Amortisseur (100) selon la revendication 1, dans lequel ledit bouchon (2) comprend une cloison annulaire (26) adaptée pour diviser axialement ladite cavité (24) de ladite chambre interne (12).

3. Amortisseur (100) selon la revendication 2, dans lequel ladite cavité (24) est en communication de fluide avec ladite chambre interne (12) par un orifice (27) défini dans ladite cloison annulaire (26) et adapté pour recevoir ladite tige (4) avec un espace radial prédéterminé.

4. Amortisseur (100) selon la revendication 2, dans lequel ladite cloison annulaire (26) est associée de façon amovible audit bouchon (2).

5. Amortisseur (100) selon l'une quelconque des revendications précédentes, dans lequel ledit joint flottant (28) est un joint à double étanchéité, ménagé pour assurer une étanchéité avec ladite tige (4) et avec les parois latérales de ladite cavité (24).

6. Amortisseur (100) selon l'une quelconque des revendications précédentes, dans lequel le ratio de la section transversale de ladite cavité (24) par la section transversale de ladite tige (4) est compris entre environ 5 et environ 30.

7. Amortisseur (100) selon la revendication 6, dans lequel le ratio de la section transversale de ladite cavité (24) par la section transversale de ladite tige (4) est compris entre environ 10 et environ 20.

8. Amortisseur (100) selon l'une quelconque des revendications précédentes, dans lequel ledit bouchon (2) comprend un logement (23) adapté pour recevoir de façon sensiblement complète un axe de poussée (41) associée à ladite second extrémité (4b) de la tige (4).

9. Amortisseur (100) selon la revendication 8, dans lequel le logement (23) comprend au moins une rainure longitudinale (25) adaptée pour recevoir de manière coulissante au moins une protubérance (43) s'étendant latéralement depuis ledit axe de poussée (41).

10. Amortisseur (100) selon l'une quelconque des revendications précédentes comprenant un élément de rappel (6) adapté pour assurer une force de rappel pour ledit piston (3), ledit élément de rappel (6) étant logé à l'intérieur de ladite chambre interne (12).

11. Meuble comprenant un amortisseur (100) selon l'une quelconque des revendications précédentes.
